# EUROPEAN PATENT APPLICATION

(11) **EP 4 307 412 A1**
(43) Date of publication of application: **17.01.2024**
(21) Application number: 22306038.5
(22) Date of filing: 11.07.2022
(51) Int. Cl.: H01M 4/90, H01M 8/04089, H01M 8/1011

(54) **HYDROPHOBIC BIOBINDER FOR CATHODIC FORMULATION**

(71) Applicant: BeFC, 38000 Grenoble (FR)
(72) Inventor: SOLAN, Sébastien, 38400 SAINT MARTIN D'HERES (FR); BESSAC, Elise, 38000 GRENOBLE (FR); HAMMOND, Jules, 38610 GIERES (FR); BLOCH, Jean-Francis, 38610 GIERES (FR)
(74) Representative: Novagraaf Technologies

(57) **Abstract**

The present invention concerns manufacturing of a hydrophobic double emulsion (hydrophobic bio binder) to be integrated in a biocathode ink in order to provide a cathodic ink formulation for a hydrophobic biocathode.

## Description

### Technical field of the invention

The present invention relates to the manufacturing of a hydrophobic double emulsion, also named "hydrophobic bio binder", to be integrated in a biocathode ink in order to provide a cathodic ink formulation for a hydrophobic biocathode, to enhance oxygen diffusion, avoid flooding without the use of fluorinated polymers, and keep a global biofuel cell comprising the same biodegradable.

In the description below, references in square brackets ([ ]) refer to the list of references at the end of the text.

### State of the art

Biological fuel cells (Biofuel cells) offer an attractive means to provide eco-friendly and sustainable power to electronic devices, particularly for small portable devices for applications such as healthcare, environmental monitoring, bio-defense, etc. Given that enzyme-based fuel cells can operate using substrates that are abundant in the biological fluids and environmental effluent (*i.e.*, glucose and oxygen) whilst exhibiting power densities that are often superior to microbial fuel cells, they offer an attractive proposition to augment or self-power miniaturized wearable or implantable devices [1,2,3]. Furthermore, paper-based devices are gaining popularity as propositions for these types of applications owing to their low mass, small form factor and flexibility, allowing them to conform to a range of different surfaces.

One of the critical issues associated with the fuel cell is in water management, which needs a delicate water balance scheme between the system hydration and cathode flooding.

On one hand, water is essential for separator membrane to facilitate proton conductibility. On the other hand, if excessive water fills the pores of the catalyst layer (CL) and gas diffusion layer (GDL), the electrode reaction becomes mass-transport-limiting, which leads to rapid cell voltage drop and immediate cell performance degradation. In view of the fact that water is produced by the oxygen reduction reaction within the CL and transports from anode to cathode through electro-osmotic drag, proper flooding prevention in the cathode design and operation is vital in ensuring the high performance and prolonged life span of fuel cells.

During the operation, the properties of CL and GDL significantly affect the balance of water in the fuel cell. Sinha et al. [4] investigated the profound influence of the underlying structure and surface wettability on liquid water transport and interfacial dynamics in the fuel cell GDL at the pore level.

Although the importance of GDL in preventing flooding has been extensively studied, the role of the Clin fuel cell water balance has never been investigated in depth, either experimentally or numerically. The CL can act as watershed in fuel cell to regulate the balance between the liquid water and vapor. Park et al. [5] numerically showed that the different wettability in both CL and GDL could affect liquid water flow patterns significantly, thus influencing the performance of the cell.

Different strategies are reported in the literature to modify the structure of the cathode to improve the performance of the entire stack.

Qiu et al. [6] developed a novel cathode structure, with a double CL containing a hydrophilic inner layer covered with a hydrophobic layer, their MEA with this double CL yielded better Pt utilization, reduced the interfacial resistance between the CL and the GDL, and enhanced mass transfer, resulting in a higher performance MEA. Wei et al. [7] designed a cathode structure with gradient Pt nanowires, which boosted Pt utilization and promoted mass transfer, yielding high performance. Deshmukh et al. [8] prepared a MEA with a micropatterned electrode structure to enhance the performance by alleviating cathode flooding and facilitating reactant diffusion. The aforementioned studies focused on the structural design of the CL to improve MEA performance. Another approach for boosting MEA performance and water management is to adjust the hydrophilicity and hydrophobicity of the CL or GDL [9]. Oh et al. [10] introduced poly(vinylidenefluoride-co-hexafluoropropylene) (P(VdF-co-HFP)) copolymer as the binder in the CL to increase its hydrophobicity and thereby prevent water flooding. Li et al. [11] enhanced MEA performance by adding dimethyl silicone oil to the CL to increase oxygen permeability and hydrophobicity, resulting in better oxygen diffusion and water management. Hiramitsu et al. [12] designed a GDL with a smaller pore structure, enabling the CL to resist water flooding more effectively. In previous work, Chi et al. [13] balanced hydrophobicity and hydrophilicity by adding polytetrafluoroethylene (PTFE) to the CL, thereby improving water management.

In the case of a biofuel cell, water management and oxygen mass transport are also essential to ensure optimal performance and prolonged lifetime. Controlled hydrophobicity of the cathode can be achieved by adding a hydrophobic binder emulsion in its composition.

Elsewhere, bio enzymatic fuel cells have the possibility of being biodegradable and biobased because of their bio-based catalyst. This environmental parameter is particularly important from an application point of view and constrains the formulation of the materials used in their composition. For the moment, no bio-degradable or bio sourced materials are used as a hydrophobic enhancer in biofuel cell field.

Currently, the development of global agriculture and issues related to food security raise many problems, including the need for improvement of preserving post-harvest agricultural products, especially the preservation of fresh fruits and vegetables, etc... Therefore, there are many studies on various methods of food preservation to ensure quality during transportation. Some study aims to create protective films that are environmentally friendly and safe for consumers, to increase value from utilizing local raw materials, and to promote exporting potential for fresh fruits and vegetables.

Various natural polymer materials instead of single or synthetic polymer, including polysaccharides (chitosan, cellulose, starch and their derivatives), proteins (gelatin and soy protein) and lipids (beeswax, candelilla wax and carnauba wax), had been used to develop edible emulsion-based coatings [14, 15]. Chitosan, a natural polycationic polysaccharide, has been widely used as coating material due to its excellent film-forming ability and antibacterial activity [16, 17], but the poor flexibility and ductility greatly limited its application. Carboxymethyl chitosan (CCS), as an amphoteric derivative of chitosan, has improved water solubility and retains other properties of chitosan, which has been extensively applied in food packaging [18-20]. However, most of the coating materials derived from water-soluble polymers performed high hydrophilicity, which extremely limited their applications in moist environment. The lipid compounds, such as wax materials (beeswax, candelilla wax and carnauba wax), has high water retarding ability; Regrettably, the coating film formed by pure waxes had poor mechanical strength. Polysaccharides, such as cellulose and its derivatives could be applied to mix with wax component to form films with decreased water vapor transmission and water swelling [21, 22]. Therefore, there was a great significance to fabricate edible coatings consisting of CCS, cellulose and beeswax via Pickering emulsion method to overcome the drawbacks of coatings made from the single component.

In biofuel cells, catalysis is based on enzymatic reactions. Immobilization of enzymes in the presence or absence of redox mediators offers many advantages, such as improved electronic transfer and long-term stability. However, immobilization can also affect the stability and/or activity of the enzyme. The stability of the immobilized enzyme depends on the nature and strength of the electrode bonds, the conditions of immobilization, the degree of confinement and the conditions under which enzymatic reactions occur in an electrode in operation. Each method of immobilization has its advantages and disadvantages. The immobilization process must therefore be carefully chosen to avoid the denaturation of enzymes and the loss of structural freedom required for their activity.

The main immobilization techniques are physical adsorption, reconstitution of the apoenzyme, encapsulation, covalent grafting, immobilization by crosslinking, immobilization in a hydrogel.

One strategy for enzyme immobilization and stabilization has been the use of micellular polymers. Enzymes in solution are typically active for a few hours to a few days. This lifetime can be extended to 7-20 days by entrapment in hydrogels and binding to electrode surfaces. However, researchers at saint Louis University have extended active enzymes lifetimes at electrode surfaces to greater than one year by immobilization within hydrophobically modified micellar polymers [23].

Micellar polymers, such as Nafion and chitosan, can be hydrophobically modified to tailor the micellar pore or pocket structure to be the optimal size for enzyme immobilization, while also ensuring a hydrophobic and buffered pH microenvironment for optimal enzyme activity. This strategy has been shown both to increase the active lifetime of the enzyme, but also to increase the enzymatic activity of the enzyme by up to 2.5-fold [24]. However, this hydrophobic modification involves an expensive and long freeze-drying procedure to produce the polymer. In addition, such hydrophobic modifications make the polymer completely hydrophobic and do not allow this character to be adjusted in a controlled way.

Thus there is still a need to provide a biodegradable hydrophobic composition for biofuel cell cathode, that does not have the prior art disadvantages of the prior art.

### Description of the invention

Therefore the Inventors addressed the double problem of drowning the cathode and fine tuning the hydrophobic/hydrophilic ratio of the cathodic layer while maintaining the overall biodegradability of the fuel cell by the use of biobased products.

To this aim, the Inventors realized a double emulsion from a hydrogel bio sourced polymer, such as for example chitosan, as a first emulsion and a bio sourced hydrophobic wax, such as for example beeswax, as a second emulsion. This double emulsion formulation was then added in the composition of a bio-active ink as the main binder for the realization of a bio-cathode for bio-enzymatic fuel cell.

The inventors thus provided a biodegradable hydrophobic composition for biofuel cell cathode with an adjustable hydrophilicity/hydrophobicity ratio.

An object of the present invention is therefore a cathodic ink formulation comprising the mixture of a hydrogel bio sourced polymer as a first emulsion with a bio sourced hydrophobic wax as a second emulsion, and a bioactive ink.

By "hydrogel" biosourced polymer, it is meant a three-dimensional network of hydrophilic polymer(s) that when in water can swell and retain the liquid.

By "biosourced", it is meant a product or material made entirely or essentially from materials of biological origin.

By "bio-active ink", it is meant a fluid or viscous substance used for printing. The term bio-active designates in the present case, the possibility of catalyzing oxidation-reduction reactions with a biological catalyst.

According to a particular embodiment of the present invention, the cathodic ink formulation comprises:
(a) a double emulsion formulation wherein the double emulsion formulation comprises a hydrogel bio sourced polymer as a first emulsion with a bio sourced hydrophobic wax as a second emulsion;
(b) and a bioactive ink;
wherein the bioactive ink is added to the double emulsion formulation.

In the cathodic ink formulation of the present invention, the polymer of the hydrogel bio sourced polymer can be chosen from the group consisting of chitosan, hydroxypropyl cellulose, hydroxypropyl methylcellulose, carboxymethyl cellulose, poly (acrylic acid).

According to the present invention, the bio sourced hydrophobic wax can be chosen from the group consisting of beeswax, carnauba wax, candelilla wax, sunflower wax, berry wax, Myrica fruit wax, lanolin, cetylesters wax (cetyl palmitate) and other Phyto waxes.

By "Phyto waxes", it is meant waxes of vegetable origin.

According to the present invention, the bioactive ink can comprise mesoporous carbon, water, at least one polymer and a multi-copper enzyme. Preferably, the bioactive ink is added after the formation of the double emulsion since it contains enzymes and high molecular weight polymers (e.g. about 250 000 to 3 000 000 Da) not fully compatible with high shear rate process used to make emulsions.

According to the present invention, the mesoporous carbon of the bioactive ink can be chosen from the group consisting of carbon nanofibers, carbon black, and carbon nanotubes.

According to the present invention, the at least one polymer of the bioactive ink can be chosen from the group consisting of chitosan, hydroxypropyl cellulose, hydoxypropyl methylcellulose, carboxymethyl cellulose, poly(acrylic acid).

According to the present invention, the multi-copper enzyme of the bioactive ink can be chosen from the group consisting of bilirubin oxidase and laccase.

According the present invention, the ratio second emulsion to first emulsion of the double emulsion formulation can be 70/30 to 99/1, preferably is 98/2.

According to the present invention, the bioactive ink can represent from 1 to 20%, preferably 15%, of the total weight of the formulation.

Another object of the present invention is also a hydrophobic biocathode comprising a cathodic ink formulation of the present invention.

Another object of the present invention is also a biofuel cell comprising a hydrophobic biocathode of the present invention.

Another object of the present invention is also a method for preparing a cathodic ink formulation of the present invention, said method comprising the steps of:
a) preparing a first emulsion of a hydrogel bio sourced polymer;
b) preparing a second emulsion of a bio sourced hydrophobic wax;
c) mixing the first and the second emulsions thereby obtaining a double emulsion formulation; and
d) mixing the double emulsion formulation obtained in step c) with a bioactive ink.

Another object of the present invention is also the use of a hydrophobic bio binder comprising or consisting of a double emulsion formulation wherein the double emulsion formulation comprises a hydrogel bio sourced polymer as a first emulsion with a bio sourced hydrophobic wax as a second emulsion, as defined in the present invention, in a biofuel cell. The double emulsion makes the resulting layer enough hydrophobic to enhance the oxygen concentration near the catalytic center but allows enough hydration to keep a good protonic conductivity.

### Brief description of the figures

Figure 1 represents polarization test for 4 different cathodic ink formulations. (squares) A- BW E4 95/5 (plus) B- BW E5 90/10 (crosses) C- BW E6 98/2 (rounds) D- PTFE.

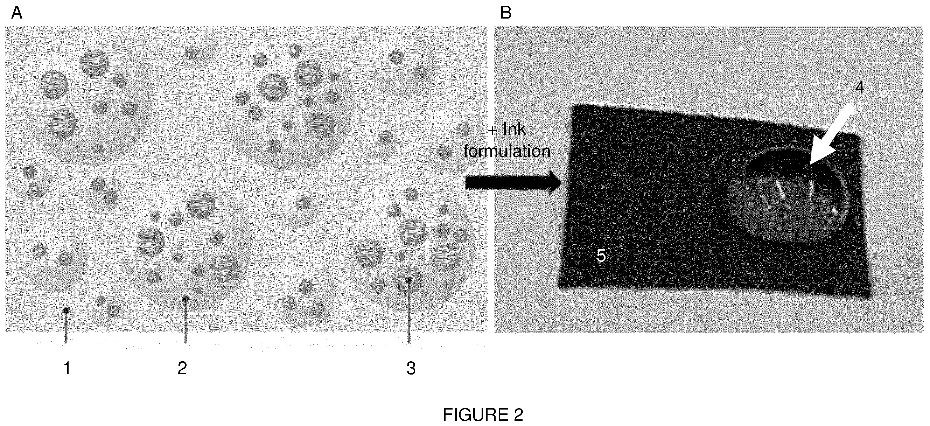

Figure 2 represents (A) a schematic view of a double emulsion formulation (hydrophobic bio binder) used according to the present invention to provide (B) a hydrophobic biocathode comprising the same with added ink formulation (cathodic ink formulation). (1) water; (2) hydrophobic bio sourced wax (second emulsion); (3) hydrogel bio sourced polymer (first emulsion); (4) water droplet; (5) hydrophobic biocathode.

### EXAMPLE 1: BIODEGRADABLE HYDROPHOBIC COMPOSITION (HYDROPHOBIC BIODINDER) FOR BIOFUEL CELL CATHODE

### 1. Bee wax system formulations (double emulsion formulations)

Bee wax system formulations were prepared with:
- Beeswax bleached (CAS:8012-89-3)
- Chitosan from crab shells (cas:9012-76-4) dispersed in water (3% wt)
- Tween 20 (CAS:9005-64-5) (in the same proportion as dry chitosan)
- Glycerol (CAS:56-81-5) (0.25* dry weight of chitosan)

Four different bee wax emulsions were prepared with different ratio of wax/chitosan (wt: 0/100; 90/10; 95/5; 98/2).

Regarding the preparation of double emulsion formulations, beeswax was heated at 95°C until it was fully melted.

### First emulsion:

In parallel, chitosan dispersed in water, Tween 20 and glycerol were mixed and passed through an ULTRA-TURRAX^{®} rotor stator equipment during 20 minutes at 25 000rpm.

### Second emulsion:

Then, this preparation (first emulsion) and previously melted beeswax were mixed together, and passed through an ULTRA-TURRAX^{®} rotor stator equipment during 30 minutes at 25 000 rpm.

The double-emulsion formulations made the resulting layer enough hydrophobic to enhance the oxygen concentration near the catalytic center but allowed enough hydration to keep a good protonic conductivity.

### 2. Contact angle measurement of the bee wax system formulations

The 4 double emulsion formulations were coated on glass with a controlled thickness of 200 µm and squeegee speed of 30 mm/s.

Then these samples were heated in the oven at 40°C until the layers were fully dried.

Contact angles were determined with Ossila's Contact Goniometer and its related software. An electronic pipette dispensed distilled water drops of 10 µL. 6 samples were tested per bee wax emulsions. 3 measurements of contract angles were taken for 1 sample and an average was made between left and right angle.

| | Ratio beeswax/chitosan | Average contact angle (°) |
|---|---|---|
| Chitosan 3% wt | 0/100 | 71 (σ = 9) |
| BW E5 | 90/10 | 90 (σ = 4) |
| BW E4 | 95/5 | 98 (σ = 6) |
| BW E6 | 98/2 | 100 (σ = 6) |

As the theory shows, the system is hydrophilic when the contact angle is between 0° and 90°. On the contrary, it is hydrophobic when this contact angle is between 90° and 180°.

The results showed that the emulsion of chitosan only was considered as a hydrophilic one (average contact angle is 71°). On the other hand, the results showed that all the bee wax double emulsion formulations had a contact angle superior or equal to 90° that meant that they could be considered as hydrophobic.

Moreover, the higher the percentage of beeswax was in the double emulsion formulations compared to chitosan, the more the layer was hydrophobic. Indeed, the double emulsion "BW E5" which had a ratio Beeswax/chitosan of 90/10 had an average contact angle of 90°, double emulsion "BW E4" which had a ratio Beeswax/chitosan of 95/5 had an average contact angle of 98°, and double emulsion "BW E6" which had a ratio Beeswax/chitosan of 98/2 had an average contact angle of 100°.

### 3. Cathodic ink formulation

With the 3 bee wax double emulsions "BW E4", "BW E5" and "BW E6", cathodic ink formulations were formulated.

Briefly, to formulate the cathodic ink formulation, the double emulsions were prepared as described above before the final mix.

Dispersion of mesoporous carbon was also made in advance with a rotor stator tool at high shear rate. This part generally took at least 15 minutes of dispersion, and was made at room temperature, until each particle was dispersed.

Then graphite particles, carbons dispersed in polymer (chitosan), double emulsion bee wax, and water were mixed at low speed using a dispermat during 30 minutes. Enzyme (bilirubin oxidase) and its promotor (hemin) were then added to this cathodic ink formulation and the system was stirred at room temperature at least for 1 hour.

The cathodic formulations A, B, C and D were composed of mesoporous carbon (3% wt), water, polymer in the same proportion for each and 1%(wt) of bilirubin oxidase enzyme. The only difference was the hydrophobic components (double emulsion components) that represented 15% of the global ink formulation.

The cathodic ink formulation was ready to be printed with a coating table on a GDL (Gaz Diffusion Layer) substrate.

The exact percentage was presented in the table below.

| Cathodic ink reference | Hydrophobic components | Ratio beeswax/chitosan | Solid content % Double emulsion components |
|---|---|---|---|
| A | BW E4 | 95/5 | 14.97 |
| B | BW E5 | 90/10 | 14.99 |
| C | BW E6 | 98/2 | 15.03 |
| D | PTFE | / | 15.17 |

A reference with PTFE was also tested in order to have a comparison with a fully hydrophobic polymer.

### EXAMPLE 2: POLARIZATION TESTS FOR CATHODIC INK FORMULATION

Four different fuel cells were built by assembling the following several layers:
- An external layer made of a glued cellulose paper, which have one opening dedicated to the breathe of the cathode and two others to take the contact of both anode and cathode;
- The printing cathode made of cathodic ink formulation (A; B; C; D) printed on GDL; GDL being on the side of the external layer;
- A microfluidic layer which is paper;
- A reference anode buckypaper functionalized with a glucose oxidase at 1.5 mg/cm², considered stable (the functionalized side being in contact with paper);
- A GDL which is used as a current collector for the anode buckypaper;
- Another external layer made of a glued cellulose paper which close the all fuel cell (with two openings to take the contact of both cathode and anode side).

Electrochemical tests were performed for these 4 different fuel cells. These were activated with a solution made of buffer (Sodium phosphate NaPB 0.1 M pH 7), electrolyte support (sodium sulfate Na₂SO₄ 0.1 M) and anodic fuel (glucose 0.2 M)

The experiments were repeated 5 times.

Polarization tests were performed with a potentiostat and its related software EC-lab. The protocol was 30 seconds rests and then applied a discharge current of - 1µA / -5µA / -10µA ... -500µA.

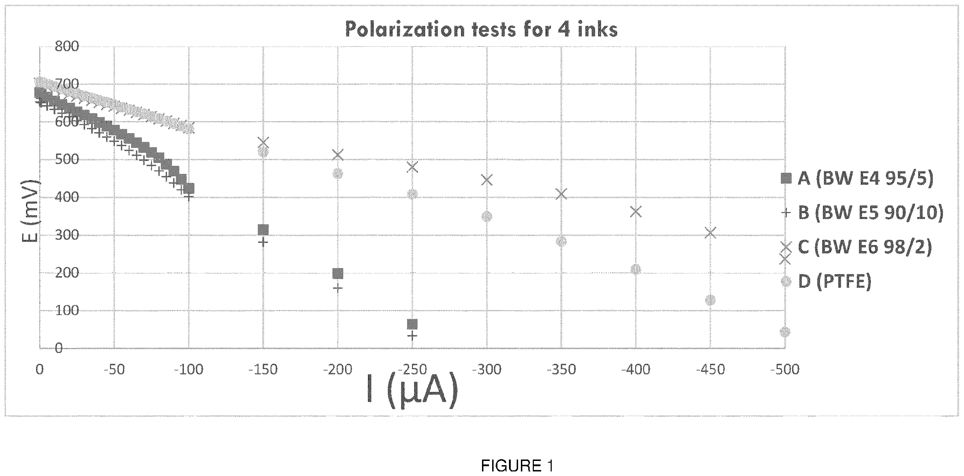

Results of polarization tests (Figure 1) showed better results for formulations where the ratio of beeswax was more important. This trend could be correlated to the contact angle results. Moreover, after -150µA, potentials were higher for formulation C (BW E6 98/2) compared to formulation D (PTFE) that showed that an adjustable ratio between hydrophobicity and hydrophilicity worked better that only hydrophobic system like PTFE only. The maximum efficiency threshold was therefore for BW/CHIT ratios above 95/5.

### List of references

1. Atanassov et al., ChemElectroChem., 1(11): 1702-1704, 2014
2. Katz et MacVittie, Energy Environ. Sci., 6: 2791-2803, 2013
3. Cosnier et al., J. Power Sources, 325: 252-263, 2016
4. Sinha et al., J. Mater. Chem., 17: 3089-3103, 2007; DOI: 10.1039/b703485g
5. Park et al., Applied Energy, 87(7): 2180-2186, 2010 doi:10.1016/j.apenergy.2009.11.021
6. Qiu et al., Int. J. Hydrogen Energy, 38(14): 5836-5844, 2013
7. Wei et al., Int. J. Hydrogen Energy, 40(7): 3068-3074, 2015
8. Deshmukh et al. https://doi.org/10.1016/j.jpowsour.2019.227284
9. Roh et al., Electrochem. Commun., 97: 105-109, 2018
10.Oh et al., Int. J. Hydrogen Energy, 36(21): 13695-13702, 2011
11. Li et al., Electrochem Commun., 11(4): 897-900, 2009
12.Hiramitsu et al., J. Power Sources, 195(22): 7559-7567, 2010
13.Chi et al., Electrochim. Acta, 277: 110-115, 2018
14.Cazón et al., Food Hydrocolloids, 68: 136-148, 2017
15.Jung et al., J. Agric. Food Chem., 63(11): 3031-3038, 2015
16.Wang et al., J. Agric. Food Chem., 66(2): 395-413, 2018
17.J. Agric. Food Chem. 2004, 52, 6585-6591
18. Hu et al., LWT - Food Sci. Technol., 65: 398-405, 2016
19.Wang et al., 2019 J. Agric. Food Chem. 2004, 52, 6585-6591
20.Wu et al., Food Hydrocolloids, 30(1): 82-91, 2013
21. Klangmuang et Sothornvit, 2016 DOl:10.1016/J.LWT.2018.01.089
22. Velickova et al., LWT - Food Sci. Technol., 52(2): 80-92, 2013
23. Neto et al., J. Power Sources, 324: 208-214 2016
24.Cooney et al., Carbohydrate polymers 75(3): 428-435, 2009

## Claims

1. Cathodic ink formulation comprising the mixture of a hydrogel biosourced polymer as a first emulsion with a biosourced hydrophobic wax as a second emulsion, and a bioactive ink.

2. Cathodic ink formulation according to claim 1 comprising:
(a) a double emulsion formulation wherein the double emulsion formulation comprises a hydrogel biosourced polymer as a first emulsion with a biosourced hydrophobic wax as a second emulsion;
(b) and a bioactive ink;
wherein the bioactive ink is added to the double emulsion formulation.

3. Cathodic ink formulation according to claim 1 or 2, wherein the polymer of the hydrogel biosourced polymer is chosen from the group consisting of chitosan, hydroxypropyl cellulose, hydoxypropyl methylcellulose, carboxymethyl cellulose, poly(acrylic acid).

4. Cathodic ink formulation according to any of claims 1 to 3, wherein the biosourced hydrophobic wax is chosen from the group consisting of beeswax, carnauba wax, candelilla wax, sunflower wax, berry wax, Myrica fruit wax, lanolin, cetylesters wax (cetyl palmitate) and other Phyto waxes.

5. Cathodic ink formulation according to any of claims 1 to 4, wherein the bioactive ink comprises mesoporous carbon, water, at least one polymer and a multi-copper enzyme.

6. Cathodic ink formulation according to claim 5, wherein the mesoporous carbon of the bioactive ink is chosen from the group consisting of carbon nanofibers, carbon black, and carbon nanotubes.

7. Cathodic ink formulation according to claim 5, wherein the at least one polymer of the bioactive ink is chosen from the group consisting of chitosan, hydroxypropyl cellulose, hydroxypropyl methylcellulose, carboxymethyl cellulose, poly(acrylic acid).

8. Cathodic ink formulation according to claim 5, wherein the multi-copper enzyme of the bioactive ink is chosen from the group consisting of bilirubin oxidase and laccase.

9. Cathodic ink formulation according to any of claims 1 to 8, wherein the ratio second emulsion to first emulsion of the double emulsion formulation is 70/30 to 99/1, preferably is 98/2.

10. Cathodic ink formulation according to any of claims 1 to 9, wherein the bioactive ink represents from 1 to 20%, preferably 15%, of the total weight of the formulation.

11. Hydrophobic biocathode comprising a cathodic ink formulation as defined in any of claims 1 to 10.

12. Biofuel cell comprising a hydrophobic biocathode as defined in claim 11.

13. Method for preparing a cathodic ink formulation as defined in any of claims 1 to 10, said method comprising the steps of:
e) preparing a first emulsion of a hydrogel bio sourced polymer;
f) preparing a second emulsion of a bio sourced hydrophobic wax;
g) mixing the first and the second emulsions thereby obtaining a double emulsion formulation; and
h) mixing the double emulsion formulation obtained in step c) with a bioactive ink.

14. Use of hydrophobic bio binder comprising a double emulsion wherein the double emulsion formulation comprises a hydrogel bio sourced polymer as a first emulsion with a bio sourced hydrophobic wax as a second emulsion, in a biofuel cell.
